# FASCICULE DE BREVET EUROPEEN

(11) **EP 0 788 678 B1**
(45) Date de publication et mention de la délivrance du brevet: **29.04.1998**
(21) Numéro de dépôt: 95935977.9
(22) Date de dépôt: 18.10.1995
(51) Int. Cl.: H02M 5/257, H02P 7/638

(54) **PROCEDE ET DISPOSITIF DE COMMANDE DE PUISSANCE D'UNE CHARGE VIA UN SYSTEME A REGLAGE DE PHASE**
VERFAHREN UND SCHALTUNGSANORDNUNG ZUR LEISTUNGSSTEUERUNG EINER LAST DURCH EIN PHASENSTEUERUNGSSYSTEM
METHOD AND DEVICE FOR LOAD POWER CONTROL VIA A PHASE ADJUSTMENT SYSTEM

(30) Priorité: 26.10.1994 FR 9412833
(43) Date de publication de la demande: 13.08.1997
(73) Titulaire: MOULINEX S.A., 75008 Paris (FR)
(72) Inventeur: BEAULIEU, Alain, Bernard, Marc, F-61000 Alencon (FR); EPINAT, Pierre, F-14123 Ifs (FR); CHAPELLIER, Laurent, F-14000 Caen (FR)
(74) Mandataire: Busquets, Jean-Pierre
(86) Numéro de dépôt international: FR9501371
(87) Numéro de publication internationale: WO9613894

(56) Documents cités:
- DE-A- 2 908 563
- DE-A- 4 130 532

## Description

La présente invention concerne un procédé et un dispositif de commande de la puissance électrique fournie à une charge alimentée par une source de tension alternative U de période T via un système à réglage de phase généralisé.

Les techniques antérieures utilisées pour commander à l'aide d'un variateur la puissance fournie à une charge utilisent soit le découpage de la tension d'alimentation du secteur selon un angle de phase adaptable en fonction de la puissance demandée, et ce pendant toute la durée de l'alimentation de la charge (voir DE-A-4 130 532, par exemple), soit la commande dite par train d'ondes qui consiste à mettre alternativement la charge en circuit puis hors circuit selon une fréquence choisie par l'utilisateur.

Le premier mode de commande à découpage de phase conduit, quand la puissance commandée dite pleine onde est élevée, à interdire toute une plage de réglage de l'angle de phase qui induirait des harmoniques de courant trop élevés d'où une gêne pour les utilisateurs branchés sur la même source d'alimentation.

Quant au second mode de commande dit à train d'ondes, il s'avère être inutilisable notamment pour la commande de la vitesse des moteurs électriques équipant par exemple les aspirateurs ou les machines à laver. En effet, une telle commande induit des variations de vitesse générant des bruits très gênants pour les utilisateurs.

Le but de l'invention est de supprimer ces inconvénients et de satisfaire notamment aux Normes concernant la limitation des perturbations apportées aux réseaux par les appareils électriques notamment les Normes EN60555-2, CEI555-2, ainsi que leurs évolutions à venir EN61000-3-2 et CEI1000-3-2, limitant les niveaux des courants harmoniques, et les Normes EN60555-3, CEI555-3, ainsi que leurs évolutions à venir EN61000-3-3 et CEI1000-3-3, limitant les variations relatives de tension en fonction du nombre de ces variations par unité de temps sur une source d'impédance définie par la norme et qui sont la cause de perturbations connues sous le nom de "FLICKER".

L'invention est définie par les caractéristiques des revendications 1, 6 et 7.

Selon une puissance de consigne préalablement fixée, on délivre successivement à ladite charge, périodiquement une séquence d'un nombre entier p d'éléments, p étant supérieur à un, chaque élément, de numéro i, de la séquence étant caractérisé par un nombre entier nᵢ de périodes T pendant lesquelles la tension alternative U est découpée symétriquement selon un angle de phase αᵢ correspondant à une durée tᵢ pendant laquelle la charge n'est pas alimentée, les angles de phases consécutifs αᵢ de l'élément i et αᵢ₊₁ de l'élément i+1 étant différents et la combinaison des angles α₁...αᵢ...αₚ étant choisie de telle sorte que, tout en fournissant à la charge la puissance souhaitée, elle satisfasse d'une part la limitation des valeurs efficaces des harmoniques de courant à des valeurs déterminées, et d'autre part le maintien dans une zone autorisée, délimitée par une courbe préalablement définie, des variations relatives de tension Δ U/U en fonction du nombre de variations par une unité de temps sur une source d'impédance préalablement déterminée.

Grâce à cette alternance des éléments, on peut faire varier la tension efficace sur des plages de puissance relativement importantes, tout en respectant les contraintes imposées par les Normes d'harmoniques et de FLICKER.

Les caractéristiques et avantages de l'invention ressortiront de la description qui va suivre, à titre d'exemple non limitatif, en référence aux dessins annexés dans lesquels :
- la figure 1 est un diagramme montrant les variations en fonction du temps de la tension instantanée dans une commande de phase classique d'une charge résistive ;
- la figure 2 est un diagramme montrant les variations en fonction du temps de la tension instantanée dans une commande classique de puissance par train d'onde d'une charge résistive ;
- la figure 3 est une vue analogue à la figure 1 illustrant le cas d'une commande de phase classique d'une charge légèrement selfique telle que par exemple un moteur universel ;
- la figure 4 est un diagramme montrant une courbe prédéfinie selon la Norme EN60555-3 représentant les variations de la tension relative ΔU/U en fonction du nombre de ces variations par minute notée R ;
- la figure 5 montre à titre d'exemple un tableau des valeurs limites des harmoniques de courant imposées par la Norme EN60555-2 pour chaque harmonique de courant ;
- la figure 6 est un diagramme montrant les variations en fonction du temps de la tension instantanée dans la commande de puissance selon un premier mode de réalisation de l'invention ;
- la figure 7 est un diagramme montrant les variations en fonction du temps de la tension instantanée dans la commande de puissance selon un deuxième mode préféré de réalisation de l'invention ;
- la figure 8 est un schéma synoptique d'un dispositif de commande de puissance selon l'invention.

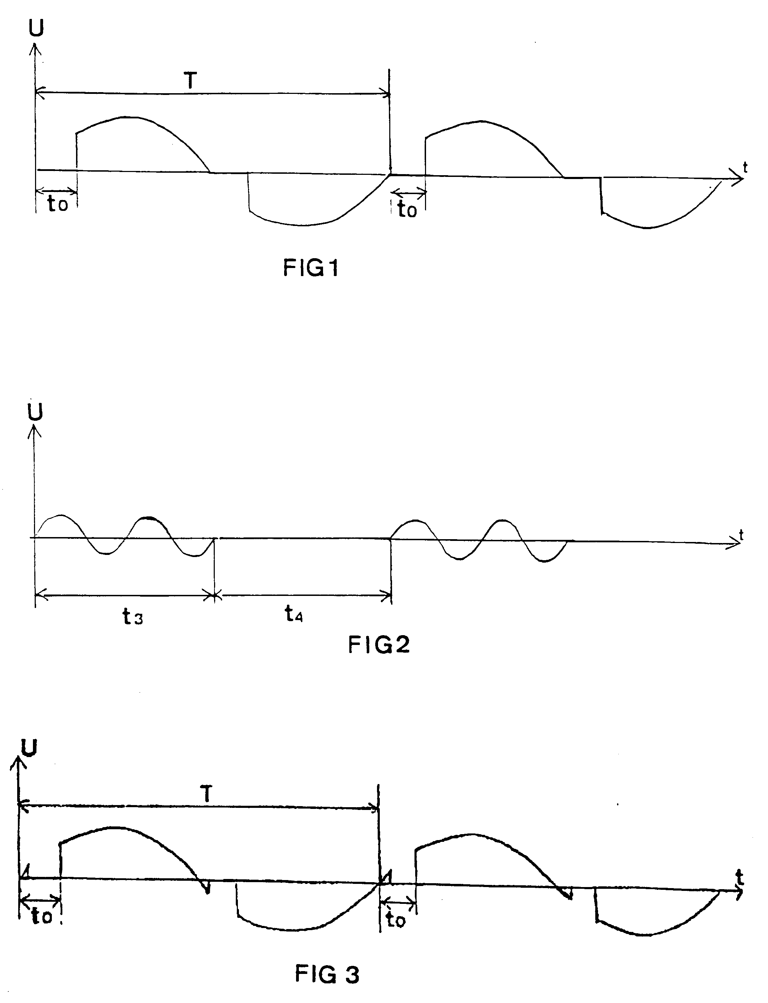

Comme on peut le voir sur les figures 1 et 3, la commande de phase classique, appliquée soit à une charge résistive, soit à une charge légèrement selfique telle qu'un moteur, consiste à découper une tension alternative d'une source d'alimentation telle que par exemple le réseau classique U = 230V.50Hz selon un angle de phase α₀ invariable correspondant à une durée t₀ pendant laquelle ladite tension alternative est nulle. Cette répétition de l'angle de phase permet d'obtenir une puissance déterminée pendant la durée d'utilisation nécessaire. De manière à obtenir plusieurs puissances, on fait varier ledit angle au moyen d'un variateur classique par exemple du type à TRIAC.

La figure 2 représente une tension d'alimentation sinusoïdale U du même type qu'illustré à la figure 1 et découpée selon un train d'ondes comportant une durée t₃ pendant laquelle la charge du type résistive est alimentée, suivie d'une durée t₄ pendant laquelle l'alimentation de la charge est coupée. Ce type d'alimentation convient bien pour des charges résistives du type chauffage mais ne convient pas pour des charges résistives du type éclairage ou inductives du type moteur électrique car elle engendre des variations de tension qui génèrent des fréquences se retrouvant dans des spectres nuisibles soit visibles provoquant des scintillements, soit acoustiques et vibratoires du moteur engendrant un bruit inadmissible.

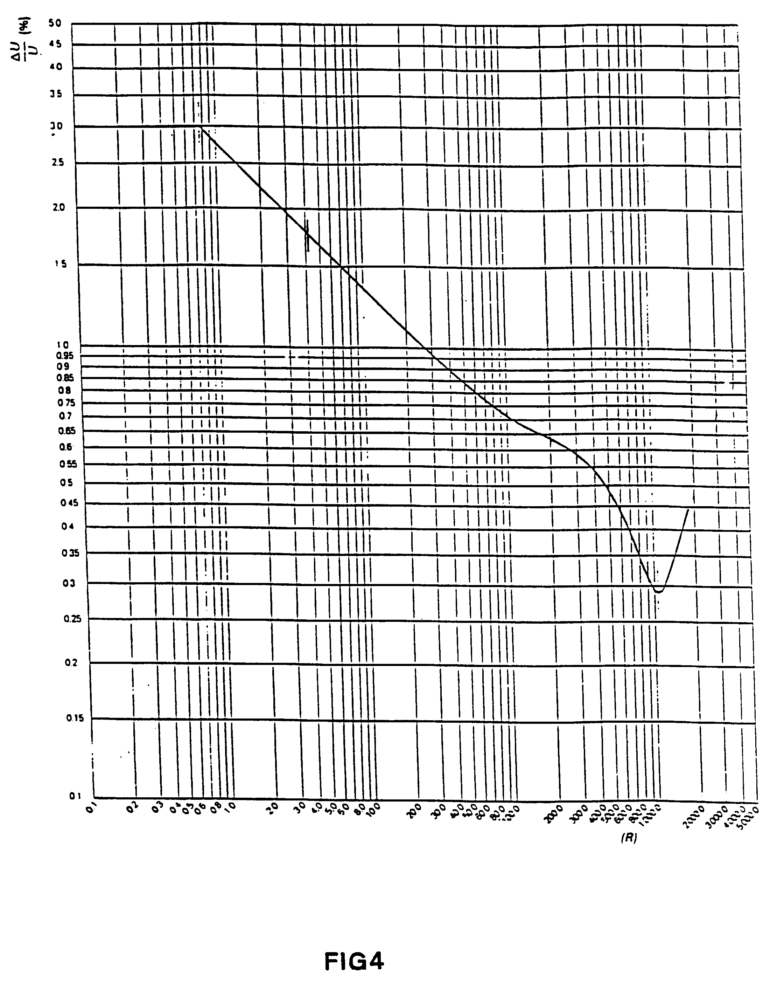

Le diagramme illustré à la figure 4 montre une courbe tracée selon la Norme EN60555-3 représentant les variations relatives de tension ΔU/U en fonction du nombre de ces variations par seconde, cette courbe délimitant une zone autorisée située entre elle et l'axe des abscisses et dans laquelle l'effet FLICKER est d'un niveau acceptable.

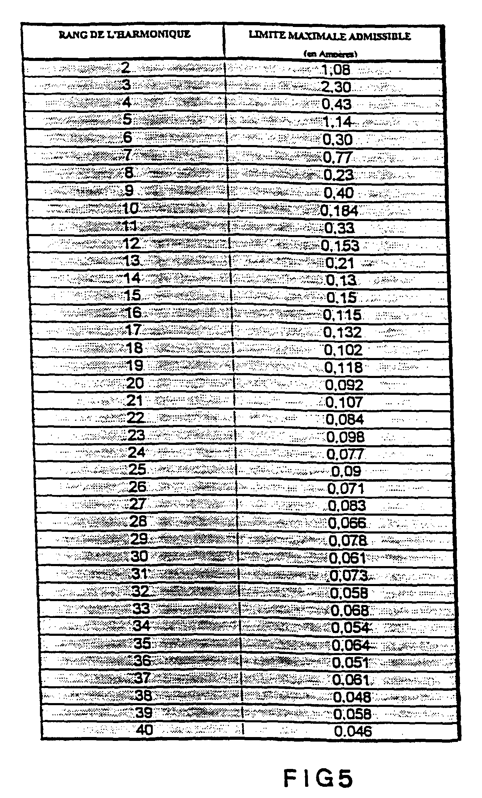

Le tableau de la figure 5 comporte, sur une première colonne, le rang des différents harmoniques, sur la seconde colonne, les limitations de courant efficace imposées notamment par la Norme EN60555-2.

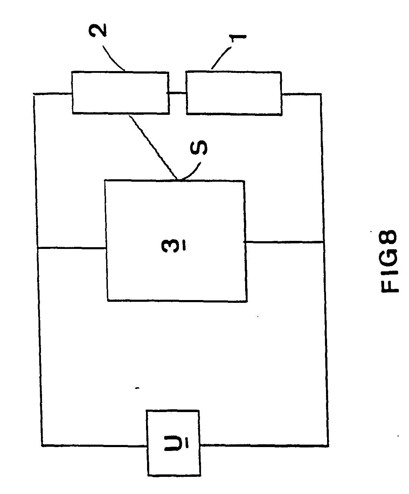

En se référant à la figure 8, il est représenté schématiquement un dispositif d'alimentation d'une charge 1 reliée à une source d'alimentation, telle que par exemple un réseau de tension alternative U = 230V, de période T = 20 ms, au moyen d'un système à réglage de phase généralisé tel que par exemple un variateur en continu comportant un interrupteur électronique 2 du type TRIAC.

Selon l'invention, pour une puissance de consigne préalablement fixée, on délivre successivement à ladite charge 1, périodiquement une séquence d'un nombre entier p d'éléments, p étant supérieur à un, chaque élément, de numéro i, de la séquence étant caractérisé par un nombre entier nᵢ de périodes T pendant lesquelles la tension alternative U est découpée symétriquement selon un angle de phase αᵢ correspondant à une durée tᵢ pendant laquelle la charge 1 n'est pas alimentée, les angles de phases consécutifs αᵢ de l'élément i et αᵢ₊₁ de l'élément i+1 étant différents et la combinaison des angles α₁...αᵢ...αₚ étant choisie de telle sorte que, tout en fournissant à la charge 1 la puissance souhaitée, elle satisfasse d'une part la limitation des valeurs efficaces des harmoniques de courant à des valeurs déterminées, et d'autre part le maintien dans une zone autorisée, délimitée par une courbe préalablement définie, des variations relatives de tension ΔU/U en fonction du nombre de variations par une unité de temps sur une source d'impédance préalablement déterminée.

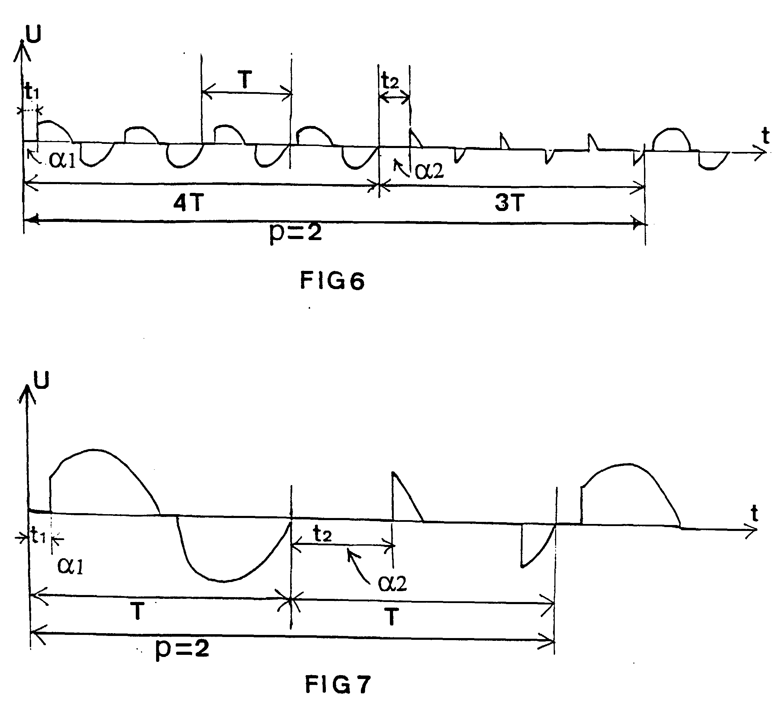

Selon un premier exemple préféré de réalisation et comme cela est illustré à la figure 6, le nombre d'éléments de la séquence est choisi à deux (p = 2) et le premier élément il comporte, par exemple, quatre périodes T découpées chacune selon un angle de phase α₁, tandis que le second élément i₂ comprend par exemple trois périodes T découpées chacune selon un angle de phase α₂ différent de α₁, les angles α₁ et α₂ étant choisis de telle sorte que le couple α₁,α₂, tout en fournissant à la charge 1 la puissance souhaitée, satisfasse aux conditions décrites ci-dessus.

Grâce à l'invention, pour un objectif donné de puissances élevées par exemple supérieures à 1000 Watts, on peut maintenant faire varier de façon continue la tension efficace et donc la puissance tout en respectant les limites d'harmoniques et de FLICKER. Ainsi, la commande par un variateur continue électronique permet d'obtenir par exemple un réglage de la luminosité d'une lampe sans clignotement désagréable ou bien un réglage de la vitesse d'un moteur dans une plage de puissances élevées sans perturber le réseau et de façon silencieuse.

Selon un second mode de réalisation préférée de l'invention, illustré à la figure 7 et que l'on peut appeler découpage de phase alterné, le nombre **p** d'éléments est maintenu à deux, tandis que les p nombres n₁ et n₂ sont tous deux égaux à un. Dans ce cas, on alimente la charge 1, d'abord, par la tension alternative U découpée selon un premier angle de phase α₁ d'une durée t₁ et, de façon consécutive pendant l'autre période T, par la tension alternative U découpée selon un deuxième angle de phase α₂ différent de α₁ et de durée t₂. Les essais réalisés permettent pour chaque charge et pour chaque puissance à fournir à la charge, de déterminer les couples d'angles α₁,α₂ respectant les limites d'harmonique de courant. Parmi ces couples, on pourra choisir avantageusement un couple minimisant l'effet FLICKER, sachant qu'un minimum de variation d'angle engendre un minimum de variation ou commutation de puissance.

Selon un autre type de fonctionnement du procédé selon l'invention, les angles de la phase αᵢ peuvent être déterminés de manière pseudo-aléatoire tout en respectant bien entendu une consigne maintenant les valeurs moyennes de αᵢ (i allant de 1 à p) à des valeurs satisfaisant pour une puissance donnée les Normes exposées ci-dessus.

Afin de mieux comprendre l'importance de l'invention notamment dans le domaine de la commande des moteurs au moyen d'un variateur continu de vitesse, on va décrire ci-après le procédé de commande selon l'invention dans le cadre de sa mise en oeuvre sur un moteur de type universel d'une puissance commandée dite maximale de 1570 Watts et susceptible d'équiper un aspirateur. Avec un variateur continu classique, on constate que pour un angle d'amorçage du TRIAC de 61°, soit P = 1150 W, on relève pour le niveau d'harmonique 3 la valeur 2,74 A, tandis que pour un angle d'amorçage de 101°, soit P = 540W, on relève à ce niveau la valeur de 2,52 A. Ainsi, ces deux valeurs sont donc supérieures à la limite autorisée de 2,3 A.

Grâce à l'invention, et dans l'exemple de réalisation préféré où on alterne deux angles de phase différents à chaque période consécutive (p = 2 et n₁ = n₂ = 1), on obtient, soit pendant la première période secteur 61°, pendant la deuxième période 101° et pendant la troisième période 61°, etc., un niveau d'harmonique 3 de seulement 2,21 A pour une puissance de 1030 W. Avec un variateur classique le niveau d'harmonique 3 serait, pour une puissance équivalente de 2,93 A et donc hors la Norme EN60555-2.

L'invention concerne également un dispositif de mise en oeuvre du procédé comportant, comme représenté sur la figure 8, l'interrupteur électronique 2 monté en série avec la charge 1 et relié à la sortie d'un moyen sélecteur 3 adapté à sélectionner par exemple deux durées t₁ et t₂ et à générer en la sortie S des signaux de commande de l'interrupteur électronique 2 de manière à fixer respectivement les angles de phase α₁ et α₂.

Avec un sélecteur électronique, on comprendra que l'on peut fixer différentes valeurs pour αᵢ en fonction du nombre d'éléments de la séquence déterminée.

Ainsi, pour une puissance de consigne fixée, le moyen sélecteur permet de déterminer les durées tᵢ et partant les angles de phase αᵢ de telle sorte que les courants induits par chaque harmonique et particulièrement par l'harmonique 3 soient inférieurs aux limites imposées par la Norme EN60555-2 comme cela est illustré sur les figures 4 et de sorte que les variations relatives de tension ΔU/U se situent en dessous de la courbe de la figure 7 comme l'exige la Norme EN60555-3.

L'interrupteur électronique 2 peut être un TRIAC et le moyen sélecteur 3 peut être obtenu à partir de composants discrets ou par un micro-processeur programmé pour calculer les durées tᵢ.

Le procédé et le dispositif de l'invention permettent d'obtenir une alimentation fiable évitant des perturbations susceptibles de gêner les utilisateurs du réseau. D'autre part, le procédé décrit est adaptable à toutes les charges par simple programmation des paramètres de commande de l'interrupteur électronique.

## Revendications

1. Procédé de commande de la puissance fournie à une charge (1) alimentée par une source de tension alternative U de période T via un système à réglage de phase généralisé,
**caractérisé en ce que,** pour une puissance de consigne préalablement fixée, on délivre successivement à ladite charge (1), périodiquement une séquence d'un nombre entier p d'éléments, p étant supérieur à un, chaque élément, de numéro i, de la séquence étant caractérisé par un nombre entier nᵢ de périodes T pendant lesquelles la tension alternative U est découpée symétriquement selon un angle de phase αᵢ correspondant à une durée tᵢ pendant laquelle la charge (1) n'est pas alimentée, les angles de phases consécutifs αᵢ de l'élément i et αᵢ₊₁ de l'élément i+1 étant différents et la combinaison des angles α₁...αᵢ...αₚ étant choisie de telle sorte que, tout en fournissant à la charge (1) la puissance souhaitée, elle satisfasse, d'une part, la limitation des valeurs efficaces des harmoniques de courant à des valeurs déterminées, et d'autre part le maintien dans une zone autorisée, délimitée par une courbe préalablement définie, des variations relatives de tension ΔU/U en fonction du nombre de variations par une unité de temps sur une source d'impédance préalablement déterminée.

2. Procédé selon la revendication 1,
**caractérisé en ce que** le nombre p d'éléments est égal à deux.

3. Procédé selon la revendication 1 ou 2,
**caractérisé en ce que** les p nombres nᵢ sont tous égaux à un.

4. Procédé selon les revendications 2 et 3,
**caractérisé en ce que** le nombre p d'éléments est égal à deux et les p nombres nᵢ sont tous égaux à un, soit n₁ = n₂ = 1.

5. Procédé selon l'une quelconque des revendications précédentes,
**caractérisé en ce que** l'on fixe de manière pseudo-aléatoire les angles αᵢ.

6. Utilisation du procédé selon l'une quelconque des revendications précédentes
pour commander un moteur universel.

7. Dispositif de commande de la puissance fournie à une charge (1) alimentée par une source de tension alternative U de période T via un système à réglage de phase généralisé,
**caractérisé en ce qu**'il comporte des moyens (2,3) délivrant successivement à ladite charge (1), périodiquement une séquence d'un nombre entier p d'éléments, p étant supérieur à un, chaque élément, de numéro i, de la séquence étant caractérisé par un nombre entier nᵢ de périodes T pendant lesquelles la tension alternative U est découpée symétriquement selon un angle de phase αᵢ correspondant à une durée tᵢ pendant laquelle la charge (1) n'est pas alimentée, les angles de phases consécutifs αᵢ de l'élément i et αᵢ₊₁ de l'élément i+1 étant différents et la combinaison des angles α₁...αᵢ...αₚ étant choisie de telle sorte que, tout en fournissant à la charge (1) la puissance souhaitée, elle satisfasse d'une part la limitation des valeurs efficaces des harmoniques de courant à des valeurs déterminées, et d'autre part le maintien dans une zone autorisée, délimitée par une courbe préalablement définie, des variations relatives de tension ΔU/U en fonction du nombre de variations par une unité de temps sur une source d'impédance préalablement déterminée.

8. Dispositif selon la revendication 7,
**caractérisé en ce que** lesdits moyens comportent un interrupteur électronique (2) monté en série avec la charge (1) aux bornes de la tension alternative U et relié à la sortie (S) d'un moyen sélecteur (3) sélectionnant les durées tᵢ pendant lesquelles la charge n'est pas alimentée et générant des signaux de commande de l'interrupteur électronique (2) de manière à fixer respectivement les angles de phase αᵢ correspondant à ladite séquence.

9. Dispositif selon la revendication 8,
**caractérisé en ce que** l'interrupteur électronique (2) est un TRIAC.

10. Dispositif selon la revendication 9,
**caractérisé en ce que** le moyen sélecteur (3) est un microprocesseur.

## Patentansprüche

1. Steuerverfahren für die elektrische Leistung, die an eine Last (1) geliefert wird, die von einer Wechselstromquelle U mit der Periode T allgemein über ein Phasenregelsystem versorgt wird,
**dadurch gekennzeichnet, daß** für eine vorher festgelegte Übergabeleistung der Last (1) nacheinander periodisch eine Sequenz einer ganzen Zahl p von Elementen geliefert wird, wobei p gröβer als eins ist, wobei jedes Element mit der Nummer i der Sequenz durch eine ganze Zahl nᵢ von Perioden T gekennzeichnet ist, während derer die Wechselspannung U symmetrisch nach einem Phasenwinkel αᵢ zerhackt wird, der einer Dauer tᵢ entspricht, während derer die Last (1) nicht versorgt wird, wobei die aufeinanderfolgenden Phasenwinkel αᵢ des Elements i und αᵢ₊₁ des Elements i+1 unterschiedlich sind und die Kombination der Winkel α₁...αᵢ...αₚ derart gewählt ist, daß sie gleichzeitig mit der Lieferung der gewünschten Leistung an die Last (1) einerseits der Begrenzung der Wirkwerte der Stromharmonischen auf bestimmte Werte genügt und andererseits der Aufrechterhaltung der relativen Spannungsschwankungen ΔU/U in Abhängigkeit von der Anzahl von Schwankungen pro einer Zeiteinheit an einer vorbestimmten Impedanzquelle in einer zugelassenen Zone genügt, die durch eine vorher definierte Kurve abgegrenzt ist.

2. Verfahren nach Anspruch 1,
**dadurch gekennzeichnet, daß** die Anzahl p von Elementen gleich zwei ist.

3. Verfahren nach Anspruch 1 oder 2,
**dadurch gekennzeichnet, daß** die p Zahlen nᵢ alle gleich eins sind.

4. Verfahren nach den Ansprüchen 2 und 3,
**dadurch gekennzeichnet, daß** die Anzahl p von Elementen gleich zwei ist und die p Zahlen nᵢ alle gleich eins sind, also n₁ = n₂ = 1.

5. Verfahren nach einem der vorhergehenden Ansprüche,
**dadurch gekennzeichnet, daß** die Winkel αᵢ pseudoaleatorisch festgelegt sind.

6. Verwendung des Verfahrens nach einem der vorhergehenden Ansprüche zur Steuerung eines Universalmotors.

7. Steuervorrichtung für die elektrische Leistung, die an eine Last (1) geliefert wird, die von einer Wechselstromquelle U mit der Periode T allgemein über ein Phasenregelsystem versorgt wird,
**dadurch gekennzeichnet, daß** sie Mittel (2, 3) aufweist, die der Last (1) nacheinander periodisch eine Sequenz einer ganzen Zahl p von Elementen liefern, wobei p größer als eins ist, wobei jedes Element mit der Nummer i der Sequenz durch eine ganze Zahl nᵢ von Perioden T gekennzeichnet ist, während derer die Wechselspannung U symmetrisch nach einem Phasenwinkel αᵢ zerhackt wird, der einer Dauer tᵢ entspricht, während derer die Last (1) nicht versorgt wird, wobei die aufeinanderfolgenden Phasenwinkel αᵢ des Elements i und αᵢ₊₁ des Elements i+1 unterschiedlich sind und die Kombination der Winkel α₁...αᵢ...αₚ derart gewählt ist, daß sie gleichzeitig mit der Lieferung der gewünschten Leistung an die Last (1) einerseits der Begrenzung der Wirkwerte der Stromharmonischen auf bestimmte Werte genügt und andererseits der Aufrechterhaltung der relativen Spannungsschwankungen AU/U in Abhängigkeit von der Anzahl von Schwankungen pro einer Zeitinheit an einer vorbestimmten Impedanzquelle in einer zugelassenen Zone genügt, die durch eine vorher definierte Kurve abgegrenzt ist.

8. Vorrichtung nach Anspruch 7,
**dadurch gekennzeichnet, daß** die Mittel einen elektronischen Schalter (2) aufweisen, der in Reihe mit der Last (1) an den Anschlüssen der Wechselspannung U geschaltet und mit dem Ausgang (S) einer Auswahleinrichtung (3) verbunden ist, die die Dauern tᵢ auswählt, während derer die Last nicht versorgt wird und Steuersignale für den elektronischen Schalter (2) erzeugt, so daß die Phasenwinkel αᵢ festgelegt sind, die der Sequenz entsprechen.

9. Vorrichtung nach Anspruch 8,
**dadurch gekennzeichnet, daß** der elektronische Schalter (2) ein Triac ist.

10. Vorrichtung nach Anspruch 9,
**dadurch gekennzeichnet, daß** die Auswahleinrichtung (3) ein Mikroprozessor ist.

## Claims

1. Method of controlling the power supplied to a load (1) fed by a source of AC voltage U of period T via a general phase adjustment system,
**characterised in that,** for a previously fixed reference power, there are delivered successively to the said load (1), periodically a sequence of a whole number p of elements, p being greater than one, each element, i in number, of the sequence being characterised by a whole number nᵢ of periods T during which the AC voltage U is cut symmetrically at a phase angle αᵢ corresponding to a time tᵢ during which the load (1) is not fed, the consecutive phase angles αᵢ of the element i and αᵢ₊₁ of the element i+1 being different and the combination of the angles α₁... αᵢ... αₚ being selected so that, while supplying the load (1) with the required power, it satisfies, on the one hand, the limitation of the effective values of the current harmonics to determined values and, on the other hand, the holding within a permitted zone, defined by a previously defined curve, of relative variations in voltage ΔU/U according to the number of variations per a unit of time over a previously determined impedance source.

2. Method according to claim 1,
**characterised in that** the number p of elements is equal to two.

3. Method according to claim 1 or 2,
**characterised in that** the p numbers nᵢ are all equal to one.

4. Method according to claims 2 or 3,
**characterised in that** the number p of elements is equal to two and the p numbers nᵢ are all equal to one, that is to say n₁ = n₂ = 1.

5. Method according to any one of the preceding claims,
**characterised in that** the angle αᵢ are set in pseudo-random fashion.

6. Use of the method according to any one of the preceding claims to control a universal motor.

7. Device for controlling the power supplied to a load (1) fed by a source of AC voltage U of period T via a general phase adjustment system,
**characterised in that** it comprises means (2,3) delivering successively to the said load (1), periodically a sequence of a whole number p of elements, p being greater than one, each element, i in number, of the sequence being characterised by a whole number nᵢ of periods T during which the AC voltage U is cut symmetrically at a phase angle αᵢ corresponding to a time tᵢ during which the load (1) is not fed, the consecutive phase angle αᵢ of the element i and αᵢ₊₁ of the element i+1 being different and the combination of the angles α₁... αᵢ... αₚ being selected so that, while supplying the load (1) with the required power, it satisfies, on the one hand the limitation of the effective values of the current harmonics to determined values and, on the other hand the holding within a permitted zone, defined by a previously defined curve, of relative variations in voltage ΔU/U according to the number of variations per unit of time over a previously determined impedance source.

8. Device according to claim 7,
**characterised in that** the said means comprise an electronic switch (2) connected in series with the load (1) at the terminals of the AC voltage U and connected to the output (S) of a selection means (3) selecting the times tᵢ during which the load is not fed and generating control signals for the electronic switch (2) so as to fix respectively the phase angles αᵢ corresponding to the said sequence.

9. Device according to claim 8,
**characterised in that** the electronic switch (2) is a triac.

10. Device according to claim 9,
**characterised in that** the selection means (3) is a microprocessor.
